(19) Europäisches Patentamt
European Patent Office
Office européen des brevets

(11) **EP 3 236 322 B1**

(12) **EUROPÄISCHE PATENTSCHRIFT**

(45) Veröffentlichungstag und Bekanntmachung des Hinweises auf die Patenterteilung:
**13.02.2019 Patentblatt 2019/07**

(51) Int Cl.:
***G04G 15/00*** *(2006.01)*   ***H05B 37/02*** *(2006.01)*

(21) Anmeldenummer: **17000430.3**

(22) Anmeldetag: **16.03.2017**

(54) **ASTRONOMISCHER ZEITSCHALTER**

ASTRONOMICAL TIME SWITCH

MINUTERIE ASTRONOMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2016 DE 202016002016 U**
**27.08.2016 DE 102016010436**

(43) Veröffentlichungstag der Anmeldung:
**25.10.2017 Patentblatt 2017/43**

(73) Patentinhaber: **Mauz, Erwin**
**59505 Bad Sassendorf (DE)**

(72) Erfinder: **Mauz, Erwin**
**59505 Bad Sassendorf (DE)**

(56) Entgegenhaltungen:
**EP-A2- 2 148 252      DE-A1- 3 019 279**
**DE-A1-102004 042 200**

**Beschreibung**

Herkömmliche astronomische Zeitschalter, DE102004042200 A1, werden im Allgemeinen eingesetzt zur Steuerung von Beleuchtungsanlagen oder Verdunklungsanlagen in Abhängigkeit der Zeit und in Abhängigkeit der täglichen Sonnenaufgänge und Sonnenuntergänge. Die Zeiten des Sonnenaufgangs und des Sonnenuntergangs werden auf Basis astronomischer Algorithmen von einem Microcontroller berechnet, der wiederum ein Schaltglied des astronomischen Zeitschalters täglich in Abhängigkeit der Zeitpunkte des Sonnenaufgangs und des Sonnenuntergangs entsprechend steuert.

DE3019279 A1 beschreibt eine astronomische Funkuhr, welche neben Schaltzeiten, die sich auf bestimmte Sonnenpositionen wie Aufgang bzw. Untergang beziehen, auch Mondpositionen zur Darstellung einer Gezeitenanzeige berechnet. EP2148252 betrifft eine programmierbare Schaltuhr mit wenigstens einem schaltbaren Ausgang zum Anschliessen wenigstens eines elektrischen Verbrauchers, der mittels der Schaltuhr zu Schaltzeitpunkten ein- oder ausgeschaltet werden soll, und mit einem Mittel zur Berechnung wenigstens eines der Schaltzeitpunkte in Abhängigkeit des Sonnenstandes und einer Benutzereingabe, wobei die Schaltuhr Mittel zum Eingeben von wenigstens einem Schaltwinkel aufweist, wobei der Schaltwinkel der Höhenwinkel der Sonne bezogen auf den Horizont ist, bei dessen Erreichen der Schaltzeitpunkt erreicht sein soll, dass das Berechnungsmittel geeignet und eingerichtet ist, für den Schaltwinkel den Schaltzeitpunkt an jedem Tag während eines Jahres zu berechnen, dass die Schaltuhr ein Stellmittel aufweist, das geeignet und eingerichtet ist, den Ausgang zu dem Schaltzeitpunkt zu schalten.

Derartige astronomische Zeitschalter haben den Nachteil, dass sie auf eine lokale Sonnenfinsternis nicht reagieren und somit nicht geeignet sind für Anwendungen, bei denen die Beleuchtung aus Sicherheitsgründen während einer lokalen Sonnenfinsternis eingeschaltet werden soll, oder gesetzlich vorgeschrieben ist. Beispiele solcher sicherheitsrelevanter Anwendungen sind Straßenbeleuchtungen, Hindernisbeleuchtungen z.B. für den Flugverkehr bzw. für die Schifffahrt, oder auch Außenbeleuchtungsanlagen für Privathäuser sowie im gewerblichen Bereich.

In vielen dieser Anwendungen werden deshalb auch heutzutage noch Dämmerungsschalter eingesetzt, die mittels eines externen Lichtsensors die Beleuchtungsstärke messen und in Abhängigkeit eines Schwellwertes der Beleuchtungsstärke eine Beleuchtungsanlage steuern. Dämmerungsschalter haben jedoch in der praktischen Anwendung mehrere erhebliche Nachteile.

Ein externer Lichtsensor bedeutet einen zusätzlichen Installationsaufwand, da eine elektrische Verbindung des Sensors durch die Außenhülle eines Gebäudes die Gesamtkosten der Installation eines Dämmerungsschalters erhöht. In manchen Fällen sind derartige externe Installationen aus architektonischen oder ästhetischen Gründen unerwünscht.

Externe Lichtsensoren sind direkt dem Umgebungsklima (Temperatur, Feuchte, Strahlung) ausgesetzt, was sich negativ auf die Zuverlässigkeit der Anlage auswirkt.

Schneeablagerungen auf dem Lichtsensor, sowie eine Vereisung des Lichtsensors können die ermittelten Messwerte erheblich verfälschen.

Die Kapselung der externen Lichtsensoren ist in der Regel spritzwassergeschützt ausgeführt. Das Material des Gehäuses ist wegen der erforderlichen Lichtmessung vielfach ganz oder teilweise transparent ausgeführt. Die Degradation des Materials infolge Strahlung, sowie Staubablagerungen, oder biologische Beeinträchtigung durch beispielsweise Algenbewuchs, verändern die Messwerte permanent.

Abschattungen durch eine Änderung der Bebauung, oder Pflanzenwuchs in der Umgebung des Lichtsensors, führen langfristig zu einer unbeabsichtigten Veränderung der Messwerte.

Externe Lichtsensoren sind immer durch Vandalismus oder gezielte Manipulation gefährdet.

Lichtquellen in der Umgebung des Sensors können das Schaltverhalten erheblich stören.

Weltweit treten jährlich mindestens zwei und sehr selten maximal fünf Sonnenfinsternisse auf. Der durchschnittliche Wert beträgt 2,38 Sonnenfinsternisse pro Jahr, wobei zweidrittel davon als totale Sonnenfinsternis, ringförmige Sonnenfinsternis bzw. hybride (Mischform) Sonnenfinsternis auftreten. Während einer Sonnenfinsternis werden große Teile der Erdoberfläche zeitweise durch den Halbschatten und während einer totalen Sonnenfinsternis ein wesentlich kleinerer Teil durch den Pfad des Kernschattens des Mondes bedeckt. Der Kernschatten wandert dabei relativ schnell oft mehrere tausend Kilometer über die Erdoberfläche und überstreicht dabei auch dicht besiedelte Gebiete. Die Kernschattenzone auf der Erdoberfläche kann während einer totalen Sonnenfinsternis in der Nähe des Äquators einen Durchmesser von maximal 273 km erreichen. Findet eine totale Sonnenfinsternis in nördlichen oder südlichen Breiten statt, dann kann die Pfadbreite des Kernschattens mehrere hundert Kilometer betragen. Die Pfadbreite des Kernschattens der Sonnenfinsternis vom 20.03.2015 betrug beispielsweise 463 km zum Zeitpunkt der größten Sonnenfinsternis. Der Halbschatten des Mondes kann bis zu einem Viertel der gesamten Erdoberfläche bedecken. Eine totale Sonnenfinsternis dauert für einen lokalen Beobachter am Äquator maximal 7,66 Minuten, eine ringförmige Sonnenfinsternis dauert maximal 12,5 Minuten. Für einen Beobachter innerhalb der Totalitätszone reduziert sich die horizontale Beleuchtungsstärke ab Beginn einer Sonnenfinsternis bis zu deren Maximum abhängig von der Höhe der Sonne über dem Horizont um den Faktor 1/10000 bis 1/100000, d.h., während einer totalen Sonnenfinsternis reduziert sich die horizontale Beleuchtungsstärke auf ca. 1 Lux, wobei die Beleuchtungssituation zu diesem Zeitpunkt vergleichbar ist mit der Situation bei Erreichen des Endes der bürgerlichen Dämmerung nach Sonnenuntergang. Oder einfach ausgedrückt, es wird Nacht, die Planeten sind während der Totalität am Himmel bereits sichtbar. Bei einer derartigen Beleuchtungsstärke ist die Einschaltung von sicherheitsrelevanten Beleuchtungsanlagen notwendig.

Der im Patentanspruch 1 angegebenen Erfindung liegt das Problem zugrunde, einen astronomischen Zeitschalter zu schaffen, der die genannten Nachteile vermeidet, und der, abhängig vom Standort auf der Erdoberfläche, den Grad einer Sonnenfinsternis in Abhängigkeit der Zeit berechnet, und die Steuerung eines Schaltgliedes in Abhängigkeit eines Grenzwertes bewirkt, wobei der Grenzwert sich auf einen bestimmten Grad einer Sonnenfinsternis bezieht.

Dieses Problem wird mit den im Patentanspruch 1 aufgeführten Merkmalen gelöst Bevorzugte Ausführungsformen sind in den abhängigen Ansprüchen 2-11 definiert.

Aus Gründen der Klarheit werden die folgenden Definitionen vorangestellt:

| | |
|---|---|
| Aberration | - scheinbare Verschiebung der Position eines Objekts aufgrund der endlichen Lichtgeschwindigkeit. |
| Terrestrische Dynamische Zeit TT | - die Terrestrische Dynamische Zeit ist eine kontinuierliche Zeitzählung, die in der Astronomie für exakte Positionsberechnungen benutzt wird. |
| Weltzeit UT | - nicht kontinuierliche Zeitzählung auf Basis der Erdrotation. Grundlage der bürgerlichen Zeitrechnung. Täglicher Wertebereich 0 Uhr bis 24 Uhr. |
| $\Delta$T-Wert | - Zeitdifferenz zwischen der Terrestrischen dynamischen Zeit und der Weltzeit. $\Delta T = TT - UT$. |
| J2000.0 | - Julianische Epoche 2000.0 bezeichnet den Zeitpunkt 01.01.2000 12 Uhr TT. Der Zeitpunkt dient in astronomischen Berechnungen als Referenzzeitpunkt. |
| Standort | - bezeichnet einen Ort an der Erdoberfläche, definiert durch die geografische Länge, die geografische Breite sowie die Höhe bezogen auf den Meeresspiegel, an dem sich der astronomische Zeitschalter oder ein Beobachter befinden. |
| Lokal | - bezogen auf den Standort. |
| Topozentrisch | - aus Sicht eines lokalen Beobachters mit Berücksichtigung der astronomischen Refraktion und der Höhenparallaxe eines Himmelskörpers. |
| Topozentrische Höhe | - Höhenwinkel zwischen dem Horizont und dem Zentrum eines Himmelskörpers aus Sicht eines lokalen Beobachters. |
| Topozentrischer Azimut | - Richtungswinkel, unter dem ein lokaler Beobachter einen Himmelskörper sieht, entlang des Horizonts von Süden nach Westen positiv gezählt. |
| Topozentrische Koordinaten | - bezeichnen jeweils den Höhenwinkel und den Azimut des Zentrums eines Himmelskörpers aus Sicht eines lokalen Beobachters. |
| Topozentrischer Winkelhalbmesser | - Winkel unter dem ein lokaler Beobachter beispielsweise den Halbmesser der Sonne erblickt. |
| Topozentrische Winkeldistanz | - Winkel unter dem ein lokaler Beobachter den Winkel zwischen den Zentren von z.B. Sonne und Mond erblickt. |
| Sonnenfinsternis | - partielle Sonnenfinsternis: Verdeckung eines Teils der sichtbaren Sonne durch den Neumond.<br>- zentrale Sonnenfinsternis: Totale oder ringförmige Verdeckung der Sonne durch den Neumond, in Abhängig von der aktuellen Entfernung Erde - Mond. |
| Grad einer Sonnenfinsternis | - Zeitabhängig berechneter Zahlenwert zwischen 0 und 1, der während einer Sonnenfinsternis das zeitabhängige Verhältnis eines durch den Mond abgedeckten topozentrischen Merkmals der Sonne zum gesamten topozentrischen Merk- |

mal der Sonne ausdrückt.

| | |
|---|---|
| Grenzwert der Sonnenfinsternis | - Eingebbarer oder unveränderbarer Vergleichswert des Grades einer Sonnenfinsternis zwischen 0 und 1, der eine Schaltschwelle definiert. |
| Magnitude einer Sonnenfinsternis | - Verhältnis des durch den Mond abgedeckten Teils des topozentrischen Winkeldurchmessers der Sonne zu dem gesamten topozentrischen Winkeldurchmesser der Sonne. |
| | Die Magnitude ist kleiner 0, solange die äußeren Ränder von Sonne und Mond sich nicht berühren. |
| | Die Magnitude ist gleich 0, wenn sich die Ränder von Sonne und Mond berühren. (Zeitpunkte des 1. und 4. Kontakts) |
| | Die Magnitude ist größer 0 und kleiner 1 während der partiellen Phase einer Sonnenfinsternis. |
| | Die Magnitude ist jeweils 1 bei Beginn und Ende der totalen Phase einer Sonnenfinsternis. (Zeitpunkte des 2. und 3. Kontakts) |
| | Die Magnitude erreicht einen Maximalwert geringförmig größer 1 während der totalen Phase einer Sonnenfinsternis. |
| | Die Magnitude erreicht einen Maximalwert geringfügig kleiner 1 während der ringförmigen Phase einer Sonnenfinsternis. |
| Bedeckungsgrad | - Verhältnis der durch den Mond bedeckten topozentrischen Sonnenfläche zur gesamten topozentrischen Sonnenfläche. |
| | Der Bedeckungsgrad ist gleich 0, wenn sich die äußeren Ränder von Sonne und Mond berühren. (Zeitpunkte des 1. und 4. Kontakts). |
| | Der Bedeckungsgrad ist größer 0 und kleiner 1 während der partiellen Phase einer Sonnenfinsternis. |
| | Der Bedeckungsgrad ist 1 bei Beginn (Zeitpunkt des 2. Kontakt) der totalen Phase der Sonnenfinsternis und bleibt 1 bis zum Ende (Zeitpunkt des 3. Kontakts) der totalen Phase einer Sonnenfinsternis. |
| | Der Bedeckungsgrad erreicht einen Maximalwert geringfügig kleiner 1 während der ringförmigen Phase einer Sonnenfinsternis. |
| Inklination des Mondorbit | - Neigung der Bahnebene des Mondorbits gegenüber der Ebene der Ekliptik. |
| Bahnknoten des Mondes | - Schnittpunkte des Mondorbits mit der Ebene der Ekliptik. |
| Knotenlinie des Mondes | - Verbindungslinie zwischen aufsteigendem und absteigenden Bahnknoten des Mondorbits. |

Mit der Erfindung wird erreicht, dass der Microcontroller des astronomischen Zeitschalters auf Basis der Eingabedaten und gespeicherter astronomischer Algorithmen und Konstanten den Grad einer Sonnenfinsternis in Abhängigkeit des Standortes und der Zeit berechnet und mindestens ein Schaltglied einschaltet, solange der berechnete Grad einer Sonnenfinsternis gleich einem Grenzwert des Grades einer Sonnenfinsternis ist, oder größer als dieser Grenzwert ist.

Eingabedaten sind das aktuelle Datum (Tag, Monat, Jahr), die lokale Uhrzeit (Stunde, Minute, Sekunde), die geografische Länge LON und geografische Breite LAT des Standortes, die Zeitzone des Standortes, die Höhe des Standortes bezogen auf den Meeresspiegel und ein Grenzwert einer Sonnenfinsternis.

Die Eingabedaten werden entweder über Eingabemittel, beispielsweise Eingabetasten, in den Microcontroller direkt eingegeben und gespeichert, oder mittels Funkempfangsmittel, beispielsweise DCF 77 Empfänger oder GPS Empfänger, in den Speicher des Microcontollers übertragen. Die Eingabedaten sind jederzeit erneut veränderbar.

Die lokale Uhrzeit und das Datum werden nach Eingabe oder Empfang mittels interner Zeithaltung laufend aktualisiert. Aus der lokalen Uhrzeit und der lokalen Zeitzone wird die Weltzeit UT berechnet. Die Höhe des Standortes über dem Meeresspiegel ist im Microcontroller mit 0 m hinterlegt und kann durch direkte Eingabe oder den Funkempfang der aktuellen Höhe überschrieben werden.

Neben den astronomischen Algorithmen sind im Speicher des Microcontroller die folgenden für die Berechnungen erforderlichen astronomischen Konstanten unveränderbar gespeichert:

Die Aberrationskonstante $\kappa$, die astronomische Einheit AU, die große Halbachse des Erdorbits $sd_{e\_orbit}$, der Äquatorradius der Erde a, der Polradius der Erde b, der Radius der Sonne $r_s$, der mittlere Radius des Mondes $r_m$. Die entsprechenden Werte werden unter anderem in [2] zur Verfügung gestellt.

Eine erste mögliche Berechnung des Grades einer Sonnenfinsternis in Abhängigkeit der Zeit und die Formulierung einer Schaltbedingung in Abhängigkeit eines Grenzwertes des Grades einer Sonnenfinsternis wird nachfolgend dargestellt, wobei der Grad einer Sonnenfinsternis durch die Magnitude einer Sonnenfinsternis ausgedrückt wird, und der Grenzwert des Grades einer Sonnenfinsternis durch einen bestimmten Grenzwert der Magnitude festgelegt wird.

Eine zweite mögliche Berechnung des Grades einer Sonnenfinsternis in Abhängigkeit der Zeit und die Formulierung einer Schaltbedingung in Abhängigkeit eines Grenzwertes des Grades einer Sonnenfinsternis wird ebenfalls dargestellt, wobei der Grad einer Sonnenfinsternis durch den Bedeckungsgrad einer Sonnenfinsternis ausgedrückt wird, und der Grenzwert des Grades einer Sonnenfinsternis durch einen bestimmten Grenzwert des Bedeckungsgrades festgelegt wird.

Mindestens ein Grenzwert des Grades einer Sonnenfinster, ausgedrückt durch einen bestimmten Wert der Magnitude der Sonnenfinsternis oder durch einen bestimmten Wert des Bedeckungsgrades der Sonnenfinsternis, ist im Speicher des Microcontrollers hinterlegt, wobei der Grenzwert des Grades einer Sonnenfinsternis mittels der Eingabemittel veränderbar ist, oder er wird unveränderbar im Speicher des Microcontrollers hinterlegt, falls eine Veränderung durch einen Anwender des astronomischen Zeitschalters unerwünscht ist.

Es wird zunächst angenommen, dass es für einen Zeitschalter, der der Steuerung von Beleuchtungsanlagen dient, ausreichend ist, wenn die Berechnung des Grades einer Sonnenfinsternis zu bestimmten Zeitpunkten, wie z.B. zu dem Zeitpunkt des 1. Kontakts, 2. Kontakts, 3. Kontakts und des 4. Kontakts mit einer Genauigkeit von +1/ -1 Minuten erfolgen. Die Genauigkeit lässt sich steigern, oder auch weiter reduzieren, indem die Anzahl der in den Reihenentwicklungen benutzten periodischen Terme erhöht oder verringert wird, oder auch, indem Näherungsberechnungen durch exaktere Berechnungen ersetzt werden oder exakte Berechnungen durch Näherungsberechnungen ersetzt werden.

Alle Berechnungen werden in Abhängigkeit der Weltzeit UT und des aktuellen Datums durchgeführt. Der Wertebereich von UT umfasst tägliche dezimale Stundenwerte zwischen 0 und 24 Stunden. Beispielsweise UT = 0,0h 0,1h 0,2h ... 24,0h.

Der geringe Unterschied zwischen der Weltzeit UT und der koordinierten Weltzeit UTC wird nicht berücksichtigt.

Auf Basis der im Microcontroller hinterlegten Algorithmen wird zunächst die Julianische Tageszahl $JD_0$ zum Zeitpunkt 0 Uhr UT für das aktuelle Datum berechnet.

Ein Schätzwert des $\Delta T$-Wertes in Abhängigkeit des aktuellen Jahres wird aus der folgenden Gleichung berechnet, worin Y für das aktuelle Jahr steht.

$$\Delta T (Y) = 62{,}92 \text{ s} + 0{,}32217 \text{ s} (Y-2000) + 0{,}005589 \text{ s} (Y - 2000)^2$$

Alternativ kann auch eine direkte Eingabe des aktuellen $\Delta T$-Wertes über die Eingabemittel vorgesehen sein.

Wenn die Julianische Tageszahl sich auf Zeitpunkte der gleichförmig ablaufenden Terrestrischen Dynamischen Zeit bezieht, wird dies durch Julian Ephemeris Day JDE gekennzeichnet. JDE zum Zeitpunkt 0 Uhr UT des aktuellen Datums berechnet sich aus folgender Gleichung:

$$JDE = JD_0 + \Delta T(Y) / 86400 \text{ s}$$

Die Julianische Tageszahl JD in Abhängigkeit von UT wird für das aktuelle Datum berechnet, indem der dezimale Tagesanteil UT / 24h zu $JD_0$ addiert wird.

$$JD(UT) = JD_0 + UT / 24h$$

Die Zeit $T_0(UT)$ ist die Zeit, die ausgedrückt in Julianischen Jahrhunderten (36525 Tage) seit Beginn der Julianischen Epoche J2000.0 bis zum Zeitpunkt JD(UT) des aktuellen Datums vergangen ist.

$$T_0(UT) = (JD(UT) - 2451545{,}0) / 36525$$

Die Julianische Tageszahl JDE in Abhängigkeit von UT wird für das aktuelle Datum berechnet, indem der dezimale Tagesanteil UT / 24h zu JDE addiert wird.

$$JDE(UT) = JDE + UT / 24h$$

Die Zeit T(UT) ist die Terrestrische Dynamische Zeit, die ausgedrückt in Julianischen Jahrhunderten seit Beginn der Julianischen Epoche J2000.0 bis zum Zeitpunkt JDE(UT) des aktuellen Datums vergangen ist.

$$T(UT) = (JDE(UT) - 2451545,0) / 36525$$

Die Zeit $T_m(UT)$ ist die Terrestrische Dynamische Zeit, die ausgedrückt in Julianischen Jahrtausenden seit Beginn der Julianischen Epoche J2000.0 bis zum Zeitpunkt JDE(UT) des aktuellen Datums vergangen ist.

$$T_m(UT) = (JDE(UT) - 2451545,0) / 365250$$

Die numerische Exzentrizität ecc(UT) der Erdbahn wird nach der folgenden Gleichung berechnet:

$$ecc(UT) = 0,016708634 - 0,000042037\ T(UT) - 0,0000001267\ T(UT)^2$$

In Abhängigkeit von UT werden die mittlere ekliptikale Länge des Mondes $L_m$, die mittlere Länge der Sonne $L_s$ und die Länge des mittleren aufsteigenden Knoten $\Omega_m$ des Mondorbits nach folgenden Gleichungen berechnet:

$$L_m(UT) = 218,3165\ \text{Grad} + 481267,8813\ \text{Grad}\ T(UT)$$

$$L_s(UT) = 280,46645\ \text{Grad} + 36000,7698\ \text{Grad}\ T(UT) + 0,0003032\ \text{Grad}\ T(UT)^2$$

$$\Omega_m(UT) = 125,04452\ \text{Grad} - 1934,136261\ \text{Grad}\ T(UT) + 0,0020708\ \text{Grad}\ T(UT)^2 + T(UT)^3 / 450000$$

Daraus lässt sich die Nutation in Länge $\Delta\Psi$ in Abhängigkeit von UT nach der folgenden Näherungsgleichung berechnen:

$$\Delta\Psi(UT) = -0,0047777778\ \text{Grad}\ \sin(\Omega_m(UT)) - 0,000366667\ \text{Grad}\ \sin(2\ L_s(UT))$$

$$- 0,00006389\ \text{Grad}\ \sin(2\ L_m(UT)) + 0,000058333\ \text{Grad}\ \sin(2\ \Omega_m(UT))$$

Ebenfalls lässt sich die Nutation in Schiefe der Ekliptik $\Delta\varepsilon$ in Abhängigkeit von UT aus der folgenden Näherungsgleichung errechnen:

$$\Delta\varepsilon(UT) = 0,00256\ \text{Grad}\ \cos(\Omega_m(UT)) + 0,00015833\ \text{Grad}\ \cos(2\ L_s(UT))$$

$$+ 0,00002778\ \text{Grad}\ \cos(2\ L_m(UT)) - 0,000025\ \text{Grad}\ \cos(2\ \Omega_m(UT))$$

Die mittlere Schiefe der Ekliptik $\varepsilon_{mean}$ in Abhängigkeit von UT berechnet sich bezogen auf das aktuelle Datum aus der Gleichung:

$$\varepsilon_{mean}(UT) = 23{,}4392911111 \text{ Grad} - 0{,}0130041667 \text{ Grad } T(UT)$$

$$- 0{,}0000001639 \text{ Grad } T(UT)^2 + 0{,}0000005036 \text{ Grad } T(UT)^3$$

Unter Berücksichtigung der Nutation berechnet sich die wahre Schiefe der Ekliptik $\varepsilon_{true}$ aus der Gleichung:

$$\varepsilon_{true}(UT) = \varepsilon_{mean}(UT) + \Delta\varepsilon(UT)$$

Die geozentrische ekliptikale Länge $\lambda_s$ und die geozentrische ekliptikale Breite $\beta_s$ der Sonne werden berechnet.
Dazu werden zunächst auf Basis einer verkürzten Version der VSOP87 Theorie [1, Seiten 166, 218-219, 418-421] in der astronomischen Einheit AU (Astronomical Unit) die Entfernung des Sonnenzentrums vom Erdzentrum $R_{s\_e\_AU}$ in Abhängigkeit von UT und die wahre geometrische Länge der Sonne $L_{s\_true}$ in Abhängigkeit von UT auf Basis der folgenden Gleichungen berechnet:

$$R_0(UT) = 100013989 \cos(0 + 0\, T_m(UT)) + 1670700 \cos(3{,}0984635 + 6283{,}07585\, T_m(UT)) + \ldots$$

$$R_1(UT) = 103019 \cos(1{,}107490 + 6283{,}07585\, T_m(UT)) + 1721 \cos(1{,}0644 + 12566{,}1517\, T_m(UT)) + \ldots$$

$$R_2(UT) = 4359 \cos(5{,}7846 + 6283{,}0758\, T_m(UT)) + 124 \cos(5{,}579 + 12566{,}152\, T_m(UT)) + \ldots$$

$$R_3(UT) = 145 \cos(4{,}273 + 6283{,}076\, T_m(UT)) + 7 \cos(3{,}92 + 12566{,}15\, T_m(UT))$$

$$R_4(UT) = 4 \cos(2{,}56 + 6283{,}08\, T_m(UT))$$

$$R_{s\_e\_AU}(UT) = (R_0(UT) + R_1(UT)\, T_m(UT) + R_2(UT)\, T_m(UT)^2 + R_3(UT)\, T_m(UT)^3 + R_4(UT)\, T_m(UT)^4) / 10^8$$

$$L_0(UT) = 175347046 \cos(0 + 0\, T_m(UT)) + 3341656 \cos(4{,}6692568 + 6283{,}07585\, T_m(UT)) + \ldots$$

$$L_1(UT) = 628331966747 \cos(0 + 0\, T_m(UT)) + 206059 \cos(2{,}678235 + 6283{,}07585\, T_m(UT)) + \ldots$$

$$L_2(UT) = 52919 \cos(0 + 0\, T_m(UT)) + 8720 \cos(1{,}0721 + 6283{,}0758\, T_m(UT)) + \ldots$$

$$L_3(UT) = 289 \cos(5{,}844 + 6283{,}076\, T_m(UT)) + 35 \cos(0 + 0\, T_m(UT)) + \ldots$$

$$L_4(UT) = 114 \cos(3{,}142 + 0\, T_m(UT)) + 8 \cos(4{,}13 + 6283{,}08\, T_m(UT)) + 1 \cos(3{,}84 + 12566{,}15\, T_m(UT))$$

$$L_5(UT) = 1 \cos(3{,}14 + 0\, T_m(UT))$$

$$L_e(UT) =$$

$$(L_0(UT) + L_1(UT)\, T_m(UT) + L_2(UT)\, T_m(UT)^2 + L_3(UT)\, T_m(UT)^3 + L_4(UT)\, T_m(UT)^4 + L_5(UT)\, T_m(UT)^5)\, /\, 10^8$$

$$L_{s\_true}(UT) = L_e(UT) + 180 \text{ Grad}$$

Die Aberrationskorrektur der Sonne $\text{Aberration}_s$ in Winkelgrad in Abhängigkeit von UT ergibt sich unter der Annahme einer ungestörten elliptischen Umlaufbahn der Erde aus der folgenden Gleichung:

$$\text{Aberration}_s(UT) = \kappa_{dec}\, sd_{e\_orbit\_AU}\, (1 - ecc(UT)^2)\, /\, R_{s\_e\_AU}(UT)$$

Darin sind $\kappa_{dec}$ der dezimale Winkelwert der Aberrationskonstante und $sd_{e\_orbit\_AU}$ die große Halbachse des Erdorbits ausgedrückt in Astronomischer Einheit AU.

Mit Berücksichtigung der Nutation und der Aberration errechnet sich die aktuelle geozentrische ekliptikale Länge der Sonne $\lambda_{s\_app}$ in Abhängigkeit von UT aus der Gleichung:

$$\lambda_{s\_app}(UT) = L_{s\_true}(UT) + \Delta\Psi(UT) - \text{Aberration}_s(UT)$$

Auf die exakte Berechnung der aktuellen geozentrischen ekliptikalen Breite der Sonne $\beta_s$ in Abhängigkeit von UT kann verzichtet werden, da die aktuelle geozentrische ekliptikale Breite der Sonne aufgrund der geringen Einflüsse des Mondes und der Planeten stets vernachlässigbar klein bleibt. Die aktuelle geozentrische ekliptikale Breite der Sonne wird daher im Rahmen der erforderlichen Genauigkeit mit 0 Grad angenommen.

$$\beta_s(UT) = 0 \text{ Grad}$$

Die Transformation der aktuellen geozentrischen ekliptikalen Koordinaten der Sonne in die aktuellen geozentrischen äquatorialen Koordinaten Rektaszension $\alpha_{s\_app}$ und Deklination $\delta_{s\_app}$ der Sonne erfolgt mittels folgender Transformationsgleichungen:

$$\alpha_{s\_app}(UT) = \text{atan}[(\cos(\varepsilon_{true}(UT))\, \sin(\lambda_{s\_app}(UT)) - \tan(\beta_s(UT))\, \sin(\varepsilon_{true}(UT)))\, /\, \cos(\lambda_{s\_app}(UT))]$$

$$\delta_{s\_app}(UT) = \text{asin}[\sin(\beta_s(UT))\, \cos(\varepsilon_{true}(UT)) + \cos(\beta_s(UT))\, \sin(\lambda_{s\_app}(UT))\, \sin(\varepsilon_{true}(UT))]$$

Die mittlere Greenwich Sternzeit $\Theta_{MGST}$ in Abhängigkeit von UT wird aus der folgenden Gleichung in Stunden berechnet:

$$\Theta_{MGST}(UT) = 24110{,}54841\, s + 8640184{,}812866\, s\, T_0(0h) + 1{,}00273790935\, UT + 0{,}093104\, s\, T_0(0h)^2$$

$$- 0{,}0000062\, s\, T_0(0h)^3$$

Die Korrektur der Nutation in Rektaszension errechnet sich aus folgender Gleichung:

$$\text{Nut}_{corr}(UT) = \Delta\Psi(UT)\, \cos(\varepsilon_{true}(UT))$$

Die Greenwich Sternzeit $\Theta_{GST\_app}$ in Abhängigkeit von UT mit Berücksichtigung der Nutationskorrektur berechnet sich aus der Gleichung:

$$\Theta_{GST\_app}(UT) = \Theta_{MGST}(UT) + Nut_{corr}(UT)\ 1\ h\ /\ 15\ Grad$$

$LON_{dec}$ ist der geografische Längengrad des Standortes in Dezimalgrad.

Die lokale Sternzeit $\Theta_{LST\_app}$ aller Orte auf diesem Längengrad in Abhängigkeit von UT mit Berücksichtigung der Nutationskorrektur errechnet sich aus der Gleichung:

$$\Theta_{LST\_app}(UT) = \Theta_{GST\_app}(UT) + LON_{dec}\ 1\ h\ /\ 15\ Grad$$

Die lokale Sternzeit $\Theta_{LST\_app\_24h}$ ausgedrückt als 24-Stundenwert ergibt sich durch Subtraktion des ganzzahligen 24-Stundenanteils aus der Gleichung:

$$\Theta_{LST\_app\_24h}(UT) = \Theta_{LST\_app}(UT) - floor(\Theta_{LST\_app}(UT)\ /\ 24\ h)\ 24\ h$$

Der Zeitwert der lokalen Sternzeit in Abhängigkeit von UT wird in Winkelgrad $\Theta_{LST\_app\_deg}$ umgerechnet.

$$\Theta_{LST\_app\_deg}(UT) = \Theta_{LST\_app\_24h}(UT)\ 15\ Grad\ /\ 1\ h$$

Der lokale Stundenwinkel $\tau_{s\_app}$ der Sonne in Abhängigkeit von UT lässt sich aus der folgenden Gleichung berechnen.

$$\tau_{s\_app}(UT) = \Theta_{LST\_app\_deg}(UT) - \alpha_{s\_app}(UT)$$

Die Transformation der äquatorialen Koordinaten der Sonne in die topozentrischen Koordinaten der Sonne Azimut $azm_{s\_topo}$ und Höhe $h_{s\_topo}$ erfolgt mittels folgender Transformationsgleichungen.

$LAT_{dec}$ ist der geografische Breitengrad des Standortes ausgedrückt in Dezimalgrad.

Der topozentrische Azimut der Sonne $azm_{s\_topo}$ in Abhängigkeit von UT ergibt sich aus der Gleichung:

$$azm_{s\_topo}(UT) = atan[sin(\tau_{s\_app}(UT))/(cos(\tau_{s\_app}(UT))\ sin(LAT_{dec}) - tan(\delta_{s\_app}(UT))\ cos(LAT_{dec}))]$$

Die Höhe der Sonne $h_s$ in Abhängigkeit von UT ergibt sich aus der Gleichung:

$$h_s(UT) = asin[cos(\delta_{s\_app}(UT))\ cos(\tau_{s\_app}(UT))\ cos(LAT_{dec}) + sin(\delta_{s\_app}(UT))\ sin(LAT_{dec})]$$

Um die topozentrische Höhe der Sonne mit hoher Genauigkeit zu berechnen, sind Korrekturen bezüglich der Höhenparallaxe der Sonne und der astronomischen Refraktion notwendig.

Die Höhenparallaxe der Sonne $parallax_s$ in Abhängigkeit von UT berechnet sich aus der Näherungsgleichung mit ausreichender Genauigkeit:

$$parallax_s(UT) = asin[\rho\ sin(parallax\_equ_s(UT))\ cos(h_s(UT))]$$

Darin ist p der auf den Äquatorradius a der Erde bezogene Abstand vom Mittelpunkt der Erde zu einem Ort einer bestimmten geografischen Breite auf Meereshöhe. $\rho$ errechnet sich aus der Gleichung:

$$\rho = 0,9983271 + 0,0016764\ cos(2\ LAT_{dec}) - 0,0000035\ cos(4\ LAT_{dec})$$

Ferner ist $parallax\_equ_s$ die äquatoriale Horizontalparallaxe der Sonne in Abhängigkeit von UT und berechnet sich aus der Gleichung:

$$\text{parallax\_equ}_s(UT) = \text{asin}[a \,/\, R_{s\_e\_AU}(UT)\ AU]$$

Die Korrektur der astronomischen Refraktion der Sonne $\text{refrac}_{s\_deg}$ wird in Winkelgrad in Anlehnung an die Näherungsformel nach Saemundsson [1, Seite 106] in Abhängigkeit von UT berechnet.

Damit errechnet sich die topozentrische Höhe der Sonne $h_{s\text{-topo}}$ in Abhängigkeit von UT aus der Gleichung:

$$h_{s\_topo}(UT) = h_s(UT) - \text{parallax}_s(UT) - \text{refrac}_{s\_deg}(UT)$$

Die geozentrische ekliptikale Länge des Mondes $\lambda_m(UT)$, die geozentrische ekliptikale Breite des Mondes $\beta_m(UT)$ und die geozentrische Entfernung des Mondzentrums vom Erdzentrum $\Delta_m(UT)$ werden auf Basis der wichtigsten periodischen Terme der ELP 2000/82 Mondtheorie [1, Seiten 337 - 342] berechnet. Dazu werden zunächst die fundamentalen Argumente des Mondorbits in Abhängigkeit von UT berechnet. Diese sind die mittlere ekliptikale Länge des Mondes $L_m$, die mittlere Elongation des Mondes $D_m$, die mittlere Anomalie des Mondes $M_m$, die mittlere Distanz des Mondes von seinem aufsteigenden Bahnknoten $F_m$ und die mittlere Anomalie der Sonne $M_s$.

$$L_m(UT) = 218{,}3164477 \text{ Grad} + 481267{,}88123421 \text{ Grad } T(UT) - 0{,}0015786 \text{ Grad } T(UT)^2$$
$$+ T(UT)^3/538841 - T(UT)^4/65194000$$

$$D_m(UT) = 297{,}8501921 \text{ Grad} + 445267{,}1114034 \text{ Grad } T(UT) - 0{,}0018819 \text{ Grad } T(UT)^2 + T(UT)^3/545868$$
$$- T(UT)^4/113065000$$

$$M_m(UT) = 134{,}9633964 \text{ Grad} + 477198{,}8675055 \text{ Grad } T(UT) + 0{,}0087414 \text{ Grad } T(UT)^2 + T(UT)^3/69699$$
$$- T(UT)^4/14712000$$

$$F_m(UT) = 93{,}2720950 \text{ Grad} + 483202{,}0175233 \text{ Grad } T(UT) - 0{,}0036539 \text{ Grad } T(UT)^2 - T(UT)^3/3526000$$
$$+ T(UT)^4/863310000$$

$$M_s(UT) = 357{,}5291092 \text{ Grad} + 35999{,}0502909 \text{ Grad } T(UT)$$
$$- 0{,}0001536 \text{ Grad } T(UT)^2 + T(UT)^3/24490000$$

Die geozentrische ekliptikale Länge des Mondes $\lambda_m(UT)$ errechnet sich aus der Gleichung:

$$\lambda_m(UT) = L_m(UT) + 6{,}288774 \text{ Grad } \sin(M_m(UT)) + 0{,}213618 \text{ Grad } \sin(2\ M_m(UT))$$
$$+ 0{,}010034 \text{ Grad } \sin(3\ M_m(UT)) + 1{,}274027 \text{ Grad } \sin(-M_m(UT) + 2D_m(UT)) +/- ...$$

Die ekliptikale Breite des Mondes $\beta_m(UT)$ errechnet sich aus der Gleichung:

$$\beta_m(UT) = 5{,}128122 \text{ Grad } \sin(F_m(UT)) + 0{,}280602 \text{ Grad } \sin(M_m(UT) + F_m(UT))$$
$$+ 0{,}277693 \text{ Grad } \sin(M_m(UT) - F_m(UT)) + 0{,}173237 \text{ Grad } \sin(2D_m(UT) - F_m(UT)) +/- ...$$

Die Entfernung in km des Mondzentrums vom Erdzentrum $\Delta_m$(UT) errechnet sich aus der Gleichung:

$$\Delta_m (UT) = 385000{,}56 \text{ km} - 20905{,}355 \text{ km cos}(M_m(UT)) - 569{,}925 \text{ km cos}(2M_m(UT))$$

$$- 3699{,}111 \text{ km cos}(2D_m(UT) - M_m(UT)) - 2955{,}968 \text{ km cos}(2D_m(UT)) +/- ...$$

Die aktuelle geozentrische ekliptikale Länge des Mondes mit Berücksichtigung der Nutation errechnet sich aus der Gleichung:

$$\lambda_{m\_app}(UT) = \lambda_m(UT) + \Delta\Psi(UT)$$

Die Transformation der geozentrischen ekliptikalen Koordinaten des Mondes in die geozentrischen äquatorialen Koordinaten Rektaszension $\alpha_{m\_app}$ und Deklination $\delta_{m\_app}$ des Mondes erfolgt mittels folgender Transformationsgleichungen.
Die aktuelle geozentrische Rektaszension $\alpha_{m\_app}$ in Abhängigkeit von UT errechnet sich aus der Gleichung:

$$\alpha_{m\_app}(UT) = atan[(sin(\lambda_{m\_app}(UT)) \, cos(\varepsilon_{true}(UT)) - tan(\beta_m(UT)) \, sin(\varepsilon_{true}(UT))) / cos(\lambda_{m\_app}(UT))]$$

Die aktuelle geozentrische Deklination des Mondes $\delta_{m\_app}$ in Abhängigkeit von UT errechnet sich aus der Gleichung:

$$\delta_{m\_app}(UT) = asin[sin(\beta_m(UT)) \, cos(\varepsilon_{true}(UT)) + cos(\beta_m(UT)) \, sin(\varepsilon_{true}(UT)) \, sin(\lambda_{m\_app}(UT))]$$

Der lokale Stundenwinkel $\tau_{m\_app}$ des Mondes in Abhängigkeit von UT lässt sich aus der folgenden Gleichung berechnen.

$$\tau_{m\_app}(UT) = \Theta_{LST\_app\_deg}(UT) - \alpha_{m\_app}(UT)$$

Die Transformation der geozentrischen äquatorialen Koordinaten des Mondes in die topozentrischen Koordinaten des Mondes Azimut $azm_{m\_topo}$ und Höhe $h_{m\_topo}$ erfolgt mittels folgender Transformationsgleichungen.
Der topozentrische Azimut des Mondes $azm_{m\_topo}$ in Abhängigkeit von UT errechnet sich aus der Gleichung:

$$azm_{m\_topo}(UT) = atan[sin(\tau_{m\_app}(UT)) / (cos(\tau_{m\_app}(UT)) \, sin(LAT_{dec}) - tan(\delta_{m\_app}(UT)) \, cos(LAT_{dec}))]$$

Die Höhe des Mondes $h_m$ in Abhängigkeit von UT errechnet sich aus der Gleichung:

$$h_m(UT) = asin[cos(\delta_{m\_app}(UT)) \, cos(\tau_{m\_app}(UT)) \, cos(LAT_{dec}) + sin(\delta_{m\_app}(UT)) \, sin(LAT_{dec})]$$

Um die topozentrische Höhe des Mondes mit ausreichender Genauigkeit zu berechnen, sind Korrekturen bezüglich der Höhenparallaxe des Mondes und der astronomischen Refraktion notwendig.
Die Höhenparallaxe des Mondes $parallax_m$ in Abhängigkeit von UT berechnet sich aus der Näherungsgleichung:

$$parallax_m(UT) = asin[\rho \, sin(parallax\_equ_m(UT)) \, cos(h_m(UT))]$$

Die äquatoriale Horizontalparallaxe des Mondes $parallax\_equ_m$ in Abhängigkeit von UT berechnet sich aus der Gleichung:

$$parallax\_equ_m(UT) = asin( a / \Delta_m(UT))$$

Die Korrektur der astronomischen Refraktion des Mondes $refrac_{m\_deg}$ wird in Winkelgrad in Anlehnung an die Näherungsformel nach Saemundsson [1, Seite 106] in Abhängigkeit von UT berechnet.

Damit errechnet sich die topozentrische Höhe des Mondes $h_{m\_topo}$ in Abhängigkeit von UT aus der Gleichung:

$$h_{m\_topo}(UT) = h_m(UT) - parallax_m(UT) - refrac_{m\_deg}(UT)$$

Die Genauigkeit der berechneten topozentrischen Koordinaten des Mondes wird alternativ durch eine genauere Korrektur der Höhenparallaxe des Mondes gesteigert, indem vorzugsweise direkt aus den aktuellen geozentrischen äquatorialen Koordinaten des Mondes die topozentrischen äquatorialen Koordinaten des Mondes berechnet werden, welche anschließend in die topozentrischen Koordinaten des Mondes transformiert werden.

Der topozentrische Winkelhalbmesser der Sonne $sd_{s\_topo}$ in Abhängigkeit von UT ergibt sich mit hinreichender Genauigkeit aus der Näherungsgleichung:

$$sd_{s\_topo}(UT) = asin[k_s \ sin(parallax\_equ_s(UT))] \ [1 + sin(h_{s\_topo}(UT)) \ sin(parallax\_equ_s(UT))]$$

Der Faktor $k_s$ ist das Verhältnis des mittleren Sonnenradius $r_s$ zum Äquatorradius a der Erde.

Der topozentrische Winkelhalbmesser des Mondes $sd_{m\_topo}$ in Abhängigkeit von UT ergibt sich mit hinreichender Genauigkeit aus der Näherungsgleichung:

$$sd_{m\_topo}(UT) = asin[k_m \ sin(parallax\_equ_m(UT))] \ [1 + sin(h_{m\_topo}(UT)) \ sin(parallax\_equ_m(UT))]$$

Der Faktor $k_m$ ist das Verhältnis des mittleren Mondradius $r_m$ zum Äquatorradius a der Erde.

Die topozentrische Winkeldistanz dist zwischen dem Zentrum der Sonne und dem Zentrum des Mondes berechnet sich in Abhängigkeit von UT aus der Gleichung:

$$dist(UT) = acos[sin(h_{s\_topo}(UT)) \ sin(h_{m\_topo}(UT))$$

$$+ cos(h_{s\_topo}(UT)) \ cos(h_{m\_topo}(UT)) \ cos(azm_{s\_topo}(UT) - azm_{m\_topo}(UT))]$$

Der Grad einer Sonnenfinsternis wird vorzugsweise durch deren Magnitude ausgedrückt.

Der Microcontroller des astronomischen Zeitschalters berechnet die Magnitude einer Sonnenfinsternis in Abhängigkeit von UT auf Basis der von UT abhängigen topozentrischen Winkeldistanz zwischen den Zentren der Sonne und des Mondes und des von UT abhängigen topozentrischen Winkelhalbmessers der Sonne und des Mondes aus der Gleichung:

$$magnitude(UT) = [sd_{m\_topo}(UT) + sd_{s\_topo}(UT) - dist(UT)] / 2 \ sd_{s\_topo}(UT)$$

Die Magnitude einer Sonnenfinsternis liefert negative Werte, wenn keine Sonnenfinsternis vorliegt. Während der partiellen Phase einer Sonnenfinsternis nimmt die Magnitude in Abhängigkeit von UT Werte zwischen 0 und kleiner 1 an, wobei der Wert 0 dem Beginn und dem Ende einer Sonnenfinsternis entspricht. Der Wert 1 kennzeichnet den Beginn und das Ende der totalen Phase einer Sonnenfinsternis.

Der Microcontroller steuert ein Schaltglied des astronomischen Zeitschalters in Abhängigkeit eines Vergleichs der berechneten zeitabhängigen Magnitude der Sonnenfinsternis mit einem Grenzwert der Magnitude.

Der Grenzwert der Magnitude ist der Grad der Magnitude, bei dessen Erreichen oder Überschreiten die Schaltung eines Schaltgliedes erfolgt. Wenn beispielsweise bei einem Grenzwert größer oder gleich 0,8 eingeschaltet werden soll, dann lautet die Schaltbedingung:

Wenn die Magnitude größer oder gleich 0,8 ist, dann Schaltglied einschalten, andernfalls sonstige Schaltprogramme ausführen.

Sonstige Schaltprogramme bezeichnet Schaltfunktionen, die in Form fester Schaltzeitpunkte, oder in Form von Schaltzeitpunkten, die sich auf den Sonnenaufgang oder Sonnenuntergang beziehen, durch einen Anwender mittels der Eingabemittel eingegeben werden können.

Die Schaltbedingung bewirkt, dass ein Schaltglied vorrangig in dem Zeitraum eingeschaltet wird, in dem die in Abhängigkeit der Zeit berechnete Magnitude der Sonnenfinsternis einen Wert erreicht, der größer als der Grenzwert der Magnitude ist, oder der dem Wert des Grenzwertes der Magnitude entspricht. Wenn die Schaltbedingung nicht erfüllt ist, wird das Schaltglied gemäß sonstiger im Speicher des Microcontrollers hinterlegter Schaltprogramme gesteuert.

Unter Berücksichtigung der eingegebenen Zeitzone rechnet der Microcontroller die zunächst in Abhängigkeit von UT berechneten Schaltzeitpunkte in die lokale Zeit um. Das Schaltglied wird durch den Microcontroller in Abhängigkeit der lokalen Zeit gesteuert.

Alternativ kann der Grad einer Sonnenfinsternis auch durch deren zeitabhängigen Bedeckungsgrad ausgedrückt werden.

Der Microcontroller des astronomischen Zeitschalters berechnet den Bedeckungsgrad einer Sonnenfinsternis dadurch, dass bezogen auf die aktuelle Entfernung des Mondes von der Erde in km, die scheinbare Distanz zwischen den Zentren der Sonne und des Mondes in km, der scheinbare Radius der Sonne in km und der scheinbare Radius des Mondes in km berechnet werden, und auf Basis dieser Werte das Verhältnis der scheinbar vom Mond bedeckten Sonnenfläche zur scheinbaren Gesamtfläche der Sonne berechnet wird.

Die scheinbare Distanz d(UT) in km zwischen Sonnenzentrum und Mondzentrum wird in Mondentfernung $\Delta_m(UT)$ aus folgender Gleichung berechnet:

$$d(UT) = \Delta_m(UT) \, \tan(dist(UT))$$

Der scheinbare Radius des Mondes $R_m(UT)$ in km wird in Mondentfernung $\Delta_m(UT)$ aus folgender Gleichung berechnet:

$$R_m(UT) = \Delta_m(UT) \, \tan(sd_{m\_topo}(UT))$$

Der scheinbare Radius des Sonne $R_s(UT)$ in km wird in Mondentfernung $\Delta_m(UT)$ aus folgender Gleichung berechnet:

$$R_s(UT) = \Delta_m(UT) \, \tan(sd_{s\_topo}(UT))$$

Der Bedeckungsgrad in Abhängigkeit von UT covering(UT) berechnet sich durch Einsetzen der entsprechenden Werte in die folgende Gleichung:

$$covering(UT) = [R_s(UT)^2 \, acos((R_s(UT)^2 - R_m(UT)^2 + d(UT)^2) / 2 \, R_s(UT) \, d(UT))$$

$$+ R_m(UT)^2 \, acos((R_m(UT)^2 - R_s(UT)^2 + d(UT)^2) / 2 \, R_m(UT) \, d(UT))$$

$$- 0{,}5 \, [(R_s(UT) + R_m(UT) + d(UT)) \, (-R_s(UT) + R_m(UT) + d(UT)) \, (R_s(UT) - R_m(UT) + d(UT))$$

$$(R_s(UT) + R_m(UT) - d(UT))]^{0{,}5}] / \pi \, R_s(UT)^2$$

Unabhängig davon, ob der berechnete Grad einer Sonnenfinsternis durch die Magnitude oder durch den Bedeckungsgrad ausgedrückt wird, wird das Einschalten und Ausschalten eines Schaltgliedes des astronomischer Zeitschalters dadurch bewirkt, dass der Microcontroller, in Abhängigkeit eines Vergleichs des berechneten Grades einer Sonnenfinsternis mit einem Grenzwert des Grades der Sonnenfinsternis, den Einschaltzeitpunkt und den Ausschaltzeitpunkt berechnet und ein Steuersignal erzeugt, durch welches das Schaltglied den eingeschalteten Schaltzustand einnimmt, solange der berechnete Grad einer Sonnenfinsternis größer als ein Grenzwert des Grades einer Sonnenfinsternis ist, oder gleich einem Grenzwert des Grades einer Sonnenfinsternis ist.

Alternativ kann die Eingabe von zwei verschiedenen Grenzwerten des Grades der Sonnenfinsternis vorgesehen sein, wobei ein erster Grenzwert benutzt wird, um den Einschaltzeitpunkt zu berechnen, und ein zweiter Grenzwert benutzt wird, um den Ausschaltzeitpunkt zu berechnen.

Bei einer ringförmigen Sonnenfinsternis ist der topozentrische Winkeldurchmesser des Mondes etwas kleiner als der topozentrische Winkeldurchmesser der Sonne. Infolgedessen erreichen sowohl die berechnete Magnitude, als auch der berechnete Bedeckungsgrad in der ringförmigen Phase einer Sonnenfinsternis nicht ganz den Wert 1. Um zu gewährleisten, dass auch bei einer ringförmigen Sonnenfinsternis eine Schaltung in Abhängigkeit des Grenzwertes des Grades der Sonnenfinsternis erfolgt, kann der Eingabebereich des Grenzwertes des Grades der Sonnenfinsternis auf einen Wert zwischen 0 und kleiner 1, vorzugsweise 0,9 eingeschränkt werden. Ein Grenzwert des Grades der Sonnenfinsternis von kleiner oder gleich 0,9 garantiert eine Einschaltung des Schaltgliedes auch während der ringförmigen Phase einer Sonnenfinsternis.

Weil die Berechnung des Grades einer Sonnenfinsternis umfangreich ist, das Auftreten einer Sonnenfinsternis im Vergleich zu den täglichen Schaltfunktionen auf Basis der sonstigen Schaltprogramme ein eher seltenes Ereignis ist, und der Microcontroller eines astronomischen Zeitschalters hauptsächlich damit beschäftigt ist, die täglichen Sonnenaufgänge und Sonnenuntergänge und daraus abgeleiteter Schaltzeitpunkte zu berechnen, ist es vorteilhaft, die Berechnungen der Sonnenfinsternisse nicht kontinuierlich in Abhängigkeit von UT durchzuführen, sondern nur in Abhängigkeit spezieller einschränkender Bedingungen, die unnötigen Rechenaufwand vermeiden.

Ein effektives Verfahren, die Berechnung des Grades einer Sonnenfinsternis auf ein notwendiges Maß zu beschränken, besteht darin, dass im Speicher des Microcontrollers eine Datumsliste zukünftiger Sonnenfinsternisse unveränderbar gespeichert ist, die alle Sonnenfinsternisse weltweit während der voraussichtlichen Betriebsdauer des astronomischen Zeitschalters umfasst. Ein aktueller Katalog der Sonnenfinsternisse von Jahr 2001 bis 2100 mit dem entsprechenden Datum der Sonnenfinsternisse wird beispielsweise unter [4] bereitgestellt. Für die Dauer der nächsten 50 Jahre benötigt eine solche Datumsliste ca. 120 Datum Einträge bestehend aus Tag, Monat und Jahr jeder zukünftigen Sonnenfinsternis. Jedes Mal wenn ein Tageswechsel erfolgt, vergleicht der Microcontroller das neue aktuelle Datum mit den Datumseinträgen der Datumsliste der zukünftigen Sonnenfinsternisse.

Ferner kann eine lokale Sonnenfinsternis nur in einem Zeitfenster stattfinden, in dem die topozentrische Höhe der Sonne $h_{s\_topo}(UT)$ größer 0 Grad ist, die Sonne sich also lokal oberhalb des Horizonts befindet.

Dadurch ergibt sich eine stark einschränkende Bedingung für die Ausführung der Berechnung des Grades einer Sonnenfinsternis, die darin besteht, dass der Microcontroller die Berechnung des Grades der Sonnenfinsternis nur dann ausführt, wenn das aktuelle Datum einem Datum der Datumsliste der zukünftigen Sonnenfinsternisse entspricht, und die topozentrische Höhe der Sonne größer 0 Grad ist.

Der Vorteil dieses Verfahrens besteht darin, dass der relativ komplizierte Mondorbit nicht unnötig berechnet werden muss, weil das Datum einer irgendwo auf der Erdoberfläche auftretenden Sonnenfinsternis bereits bekannt ist. Ebenso entfällt die Bestimmung des Neumondzeitpunktes.

Alternativ kann die Beschränkung der Berechnung des Grades der Sonnenfinsternis auch in Abhängigkeit sogenannter Finsternis-Limite und des Datums des Neumondes ausgeführt werden. Als Finsternis-Limit wird der maximale Winkelabstand der ekliptikalen Länge der Sonne oder des Mondes zur Knotenlinie des Mondorbits bezeichnet, innerhalb dessen eine Sonnenfinsternis von der Erde aus beobachtbar ist. Zunächst wird untersucht, ob am aktuellen Datum ein Neumond auftritt. Zum Zeitpunkt des Neumondes sind die ekliptikalen Längen der Sonne $\lambda_{s\_app}(UT)$ und des Mondes $\lambda_{m\_app}(UT)$ gleich, ihre Differenz $\Delta\lambda_{s\_m}$ also gleich 0.

$$\Delta\lambda_{m\_s}(UT) = \sin(\lambda_{m\_app}(UT) - \lambda_{s\_app}(UT))$$

Der Zeitpunkt des Neumondes newmoon wird berechnet, indem die Nullstelle der Funktion $\Delta\lambda_{m\_s}(UT)$ im Zeitbereich 0h UT bis 24h UT bestimmt wird.

$$newmoon = wurzel(\Delta\lambda_{m\_s}(UT), UT, 0h, 24h)$$

Wenn newmoon im Zeitbereich von 0h bis 24h liegt, findet ein Neumond am aktuellen Datum statt, und eine erste, jedoch nicht hinreichende, Bedingung für das Auftreten einer Sonnenfinsternis ist erfüllt.

Zur genaueren Berechnung der zweiten erforderlichen Bedingung für das Auftreten einer Sonnenfinsternis wird zunächst die wahre ekliptikale Länge des aufsteigenden Knoten des Mondorbits $\Omega_{m\_asc\_true}(UT)$ in Abhängigkeit von UT aus der folgenden Gleichung berechnet.

$$\Omega_{m\_asc\_true}(UT) = \Omega_m(UT) - 1{,}4979 \text{ Grad } \sin(2\,(D_m(UT) - F_m(UT))) - 0{,}15 \text{ Grad } \sin(M_s(UT))$$

$$- 0{,}1226 \text{ Grad } \sin(2\,D_m(UT)) + 0{,}1176 \text{ Grad } \sin(2\,F_m(UT))$$

$$- 0{,}0801 \text{ Grad } \sin(2\,(M_m(UT) - F_m(UT)))$$

Die Knotendistanz der Sonne node_dist$_{s\_asc}$(UT) zum aufsteigenden Bahnknoten des Mondorbits errechnet sich aus der absoluten Differenz zwischen der ekliptikalen Länge der Sonne und der ekliptikalen Länge des wahren aufsteigenden Knoten des Mondorbits aus der Gleichung:

$$\text{node\_dist}_{s\_asc}(UT) = |\,\lambda_{s\_app}(UT) - \Omega_{m\_asc\_true}(UT)\,|$$

Die Knotendistanz der Sonne node_dist$_{s\_desc}$(UT) zum absteigenden Bahnknoten des Mondorbits ergibt sich aus der absoluten Differenz der Knotendistanz der Sonne zum aufsteigenden Bahnknoten des Mondorbits minus 180 Grad.

$$\text{node\_dist}_{s\_desc}(UT) = |\,\text{node\_dist}_{s\_asc}(UT) - 180 \text{ Grad}\,|$$

Die Finsternis-Limite bezeichnen verschiedene Grenzwinkel der Knotendistanz der Sonne beidseitig der Knotenlinie des Mondorbits, unter denen garantiert Sonnenfinsternisse auftreten, oder möglicherweise Sonnenfinsternisse auftreten.

Das maximale Finsternis-Limit, unter dem noch partielle Sonnenfinsternisse auftreten können, wird berechnet, indem die ungünstigsten Konstellationen von Erde, Mond und Sonne zugrunde gelegt werden.

Für die Berechnung des maximalen Finsternis-Limits werden zunächst die scheinbaren maximalen Winkelhalbmesser des Mondes sd$_{m\_max}$ und der Sonne sd$_{s\_max}$ unter Berücksichtigung der langfristig minimalen Perihel Abstände des Mondes und der Sonne berechnet.

$$sd_{m\_max} = \text{atan}(r_m\,/\,356400 \text{ km})$$

$r_m$ = Radius des Mondes in km

$$sd_{s\_max} = \text{atan}(r_s\,/\,147100000 \text{ km})$$

$r_s$ = Radius der Sonne in km

Ferner werden die maximale äquatoriale Horizontalparallaxe des Mondes moon$_{para\_max}$ und der Sonne sun$_{para\_max}$ unter Berücksichtigung der langfristig minimalen Perihel Abstände des Mondes und der Sonne berechnet.

$$\text{moon}_{para\_max} = \text{asin}(a\,/\,356400 \text{ km})$$

a = Äquatorradius der Erde in km

$$\text{sun}_{para\_max} = \text{asin}(a\,/\,147100000 \text{ km})$$

Der Inklinationswinkel des Mondorbits incl$_m$(UT) bezogen auf die Ekliptikebene wird in Abhängigkeit von UT in Anlehnung an [3] mit hoher Genauigkeit berechnet:

$$incl_m(UT) = 5{,}15668983 \text{ Grad} + 0.13507 \text{ Grad } cos(2D_m(UT)-2F_m(UT)) - 0{,}01115 \text{ Grad } cos(2D_m(UT))$$

$$+ 0{,}01042 \text{ Grad } cos(2F_m(UT)) + 0{,}00715 \text{ Grad } cos(2M_m(UT)-2F_m(UT))$$

$$+0{,}00555 \text{ Grad } cos(2D_m(UT)-M_s(UT)-2F_m(UT))$$

Die tägliche Änderung des Inklinationswinkel bei Neumond ist sehr gering, so dass das maximale Finsternis-Limit am aktuellen Datum mit dem Inklinationswert um 12h lokaler Zeit (LCT) mit hoher Genauigkeit berechnet werden kann.

$$incl_{moon} = \ incl_m(LCT(12h))$$

Da Sonnenfinsternisse nur auftreten können, wenn sich der Neumond und die Sonne in der Nähe der Knotenlinie des Mondorbits aufhalten, und der Mondorbit zu diesem Zeitpunkt immer eine näherungsweise maximale Inklination aufweist, ist es auch möglich, die genaue Berechnung des Inklinationswinkels zu vernachlässigen, und alternativ mit einem Schätzwert zu rechnen, z.B.:

$$incl_{moon} = 5{,}28 \text{ Grad.}$$

Das maximale Finsternis-Limit $limit_{max\_partial}$ innerhalb dessen noch partielle Sonnenfinsternisse auftreten können berechnet sich aus der Gleichung:

$$limit_{max\_partial} = asin[tan(moon_{para\_max} - sun_{para\_max} + sd_{m\_max} + sd_{s\_max}) / tan(incl_{moon})]$$

Der unter den genannten Voraussetzungen berechnete Grenzwinkel $limit_{max\_partial}$ beträgt ca. 17,4 Grad.
Das maximale Finsternis_Limit $limit_{max\_central}$, innerhalb dessen noch zentrale Sonnenfinsternisse auftreten können, berechnet sich aus der Gleichung:

$$limit_{max\_central} = asin[tan(moon_{para\_max} - sun_{para\_max} + |\, sd_{m\_max} - sd_{s\_max}\,|) / tan(incl_{moon})]$$

Der unter den genannten Voraussetzungen berechnete Grenzwinkel $limit_{max\_central}$ beträgt ca. 11,2 Grad.
In gleicher Weise lassen sich die minimalen Finsternis-Limite berechnen, innerhalb derer garantiert partielle oder zentrale Sonnenfinsternisse auftreten. Dabei gehen jedoch der minimale scheinbare Winkelhalbmesser der Sonne und des Mondes, sowie die minimale äquatoriale Horizontalparallaxe der Sonne und des Mondes unter Berücksichtigung der jeweiligen langfristig maximalen Aphel Abstände des Mondes und der Sonne von der Erde in die Berechnung ein. Die entsprechenden minimalen Finsternis-Limite für sichere partielle oder sichere zentrale Sonnenfinsternisse ergeben sich zu:

$$limit_{min\_partial} = 15{,}4 \text{ Grad}$$

$$limit_{min\_central} = 9{,}9 \text{ Grad}$$

Ein bezogen auf den Anwendungsfall zweckmäßiges Finsternis-Limit wird definiert und im Speicher des Microcontrollers unveränderbar als Vergleichswert gespeichert. Wenn jede Sonnenfinsternis, auch rein partielle Sonnenfinsternisse in den Polregionen der Erde erfasst werden sollen, dann ist beispielweise das maximale Finsternis-Limit für partielle Sonnenfinsternisse $limit_{max\_partial}$ im Speicher des Microcontrollers unveränderbar zu hinterlegen.
Der Vorteil der Berechnung des Grades einer Sonnenfinsternis in Abhängig eines Finsternis-Limit besteht darin, dass der Microcontroller die Berechnung des Grades einer Sonnenfinsternis nur dann ausführt, wenn die Knotendistanz der Sonne kleiner als ein definiertes Finsternis-Limit ist, und am aktuellen Datum ein Neumond eintritt. Durch die einschränkenden Bedingungen werden nicht notwendige Berechnungen des Grades einer Sonnenfinsternis vermieden.

Ausführungsbeispiele der Erfindung werden in den Figuren 1 bis 4 erläutert.

Fig. 1 zeigt eine Darstellung der wesentlichen Funktionsgruppen des astronomischen Zeitschalters in Verbindung mit einer externen Beschaltung.

Fig. 2 a zeigt ein Diagramm des Verlaufs der Magnitude der Sonnenfinsternis in Abhängigkeit der lokalen Zeit und die berechneten Schaltzeitpunkte bei einem vorgegebenen Grenzwert der Magnitude von 0.

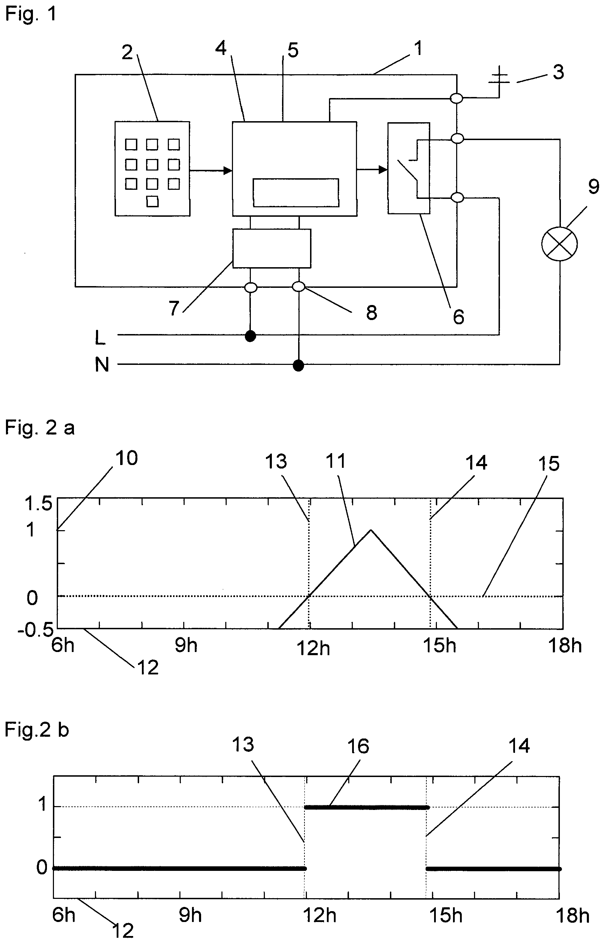

Fig. 2 b zeigt ein Diagramm des zugehörigen Schaltzustands des Schaltgliedes in Abhängigkeit der lokalen Zeit und eines vorgegebenen Grenzwertes der Magnitude von 0.

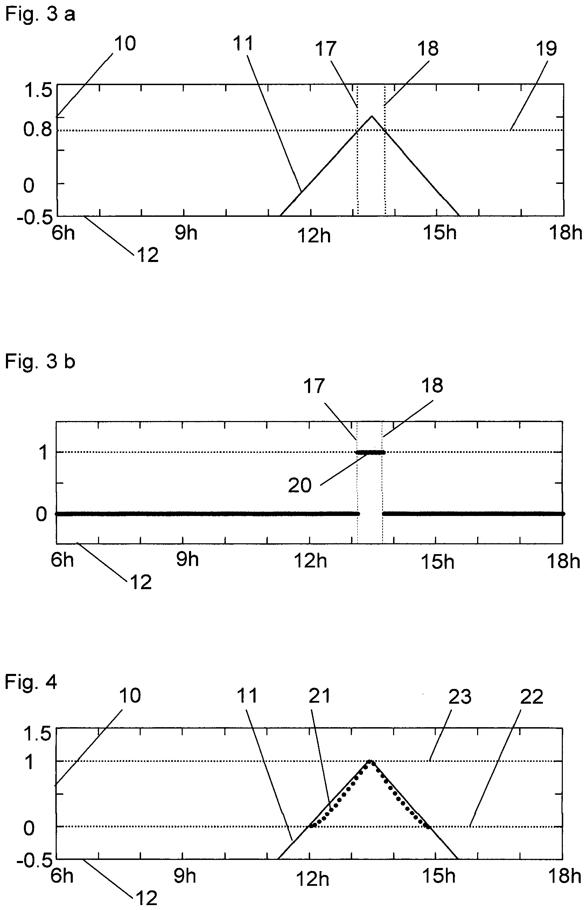

Fig. 3 a zeigt ein Diagramm des Verlaufs der Magnitude in Abhängigkeit der lokalen Zeit und die Schaltzeitpunkte bei einem vorgegebenen Grenzwert der Magnitude von 0,8.

Fig. 3 b zeigt ein Diagramm des zugehörigen Schaltzustands des Schaltgliedes in Abhängigkeit der lokalen Zeit und eines vorgegebenen Grenzwertes der Magnitude von 0,8.

Fig. 4 zeigt ein Diagramm des Verlaufs des Bedeckungsgrades im direkten Vergleich mit dem Verlauf der Magnitude der Sonnenfinsternis in Abhängigkeit der lokalen Zeit.

Fig. 1 zeigt eine Darstellung der wesentlichen Funktionsgruppen des astronomischen Zeitschalters (1) mit einer externen elektrischen Verbindung zu einem Versorgungsnetz (L) (N) und zu einem elektrischen Verbraucher (9). Ferner sind Eingabemittel (2), Funkempfangsmittel (3), ein Microcontroller (4) mit einem Speicher (5), ein Schaltglied (6), ein Netzteil (7) und Anschlussklemmen (8) dargestellt. Das Schaltglied (6) steuert den elektrischen Verbraucher (9). Die Funktionsgruppen des astronomischen Zeitschalters sind vorzugsweise in einem nicht weiter dargestellten Gehäuse untergebracht, welches den landestypischen Installationsnormen für den Einbau in eine elektrische Verteilung, oder für die Aufputz Montage, oder Ähnlichem entspricht.

Grundlage der Darstellungen in Fig. 2 a, Fig. 2 b, Fig. 3 a, Fig. 3 b und Fig. 4 ist die Sonnenfinsternis am 21.08.2017 an dem Ort mit der geografischen Länge 87° 40,3' 00" West, der geografischen Breite 36° 58' 00" Nord und der Höhe 0 m über Meeresspiegel.

Fig. 2 a Das Diagramm stellt auf der y-Achse eine Skala (10) des Grades der Sonnenfinsternis ausgedrückt durch die Magnitude (11) in Abhängigkeit der auf der x-Achse dargestellten lokalen Uhrzeit (12) in dem Zeitbereich von 6 Uhr bis 18 Uhr dar. Zusätzlich stellen die beiden punktierten Linien parallel zur y-Achse den berechneten Einschaltzeitpunkt (13) und den berechneten Ausschaltzeitpunkt (14) in Abhängigkeit des durch die punktierte Linie parallel zur x-Achse angezeigten Grenzwertes der Magnitude (15) dar, der in Fig. 2 a den Wert 0 aufweist. Die jeweils zu verschiedenen Zeitpunkten berechneten Werte der Magnitude lassen sich an der y-Achse ablesen. Die Werte der Magnitude sind negativ, solange keine Sonnenfinsternis vorliegt. Wenn der Wert der Magnitude 0 ist, dann kennzeichnen die zugehörigen Zeitpunkte den Beginn und das Ende der Sonnenfinsternis, in der Astronomie werden sie als 1. Kontakt bzw. 4. Kontakt bezeichnet.

Zu diesen Zeitpunkten berühren sich aus Sicht eines Beobachters an einem durch die geografische Länge, die geografische Breite und durch die Höhe über dem Meeresspiegel definierten Ort auf der Erdoberfläche scheinbar die äußeren Ränder der Sonne und des Mondes.

Der Zeitpunkt, zu dem die Magnitude den Wert 1 erreicht, kennzeichnet den Beginn der totalen Sonnenfinsternis. In der Astronomie wird dieser Zeitpunkt als 2. Kontakt bezeichnet. Während der totalen Phase der Sonnenfinsternis erreicht die Magnitude einen Maximalwert, der geringfügig größer als 1 ist. Danach nimmt die Magnitude wieder ab. Erreicht die Magnitude erneut den Wert 1, dann markiert dieser Zeitpunkt des 3.Kontakts das Ende der totalen Phase der Sonnenfinsternis. Erreicht die Magnitude erneut den Wert 0, dann markiert dieser Zeitpunkt des 4. Kontakts das Ende der Sonnenfinsternis.

Da der Grenzwert der Magnitude in Fig. 2 a den Wert 0 aufweist, entsprechen der errechnete Einschaltzeitpunkt (13) dem Zeitpunkt des Beginns der Sonnenfinsternis, und der errechnete Ausschaltzeitpunkt (14) dem Zeitpunkt des Endes der Sonnenfinsternis.

Fig. 2 b Das Diagramm stellt bei einem Grenzwert der Magnitude = 0 (15) den Schaltzustand (16) des Schaltgliedes (6) in Abhängigkeit der auf der x-Achse dargestellten lokalen Uhrzeit (12) in dem Zeitbereich von 6 Uhr bis 18 Uhr dar. Auf der y-Achse des Diagramms ist der von der lokalen Uhrzeit abhängige Schaltzustand des Schaltgliedes des astronomischen Zeitschalters dargestellt, wobei der y-Wert = 0 dem ausgeschalteten Zustand entspricht, und der y-Wert = 1 dem eingeschalteten Zustand entspricht. Zusätzlich stellen die beiden punktierten Linien parallel zur y-Achse den berechneten Einschaltzeitpunkt (13) und den berechneten Ausschaltzeitpunkt (14) dar.

Fig. 3 a Das Diagramm stellt auf der y-Achse eine Skala (10) des Grades der Sonnenfinsternis ausgedrückt durch die Magnitude (11) in Abhängigkeit der auf der x-Achse dargestellten lokalen Uhrzeit (12) in dem Zeitbereich von 6 Uhr bis 18 Uhr dar. Zusätzlich stellen die beiden punktierten Linien parallel zur y-Achse den berechneten Einschaltzeitpunkt (17) und den berechneten Ausschaltzeitpunkt (18) in Abhängigkeit des durch die punktierte Linie parallel zur x-Achse angezeigten Grenzwertes der Magnitude (19) dar, der in Fig. 3 a den Wert 0,8 aufweist.

Fig.3 b Das Diagramm stellt bei einem Grenzwert der Magnitude = 0,8 (19) den Schaltzustand (20) des Schaltgliedes (6) in Abhängigkeit der auf der x-Achse dargestellten lokalen Uhrzeit (12) in dem Zeitbereich von 6 Uhr bis 18 Uhr dar. Auf der y-Achse des Diagramms ist der von der lokalen Uhrzeit abhängige Schaltzustand des Schaltgliedes des astronomischen Zeitschalters dargestellt, wobei der y-Wert = 0 dem ausgeschalteten Zustand entspricht, und der y-Wert = 1 dem eingeschalteten Zustand entspricht. Zusätzlich stellen die beiden punktierten Linien parallel zur y-Achse den berechneten Einschaltzeitpunkt (17) und den berechneten Ausschaltzeitpunkt (18) dar.

Fig. 4 zeigt auf der y-Achse eine Skala (10) des Grades der Sonnenfinsternis. Auf der x-Achse ist die lokale Uhrzeit (12) im Bereich von 6 Uhr bis 18 Uhr dargestellt. Außerdem sind sowohl der Bedeckungsgrad (21) der Sonnenfinsternis als punktierte Funktion in Abhängigkeit der lokalen Uhrzeit (12), als auch vergleichsweise die Magnitude (11) der Sonnenfinsternis in Abhängigkeit der lokalen Uhrzeit (12) dargestellt. Zusätzlich ist der Grad der Sonnenfinsternis für den Wert 0 und für den Wert 1 durch punktierte Linien (22, 23) parallel zur x-Achse dargestellt.

Der Bedeckungsgrad (21) kann während einer Sonnenfinsternis Werte von 0 bis 1, oder in Prozent ausgedrückt 0% bis 100% annehmen. Der Wert 0 oder 0 % wird zum Zeitpunkt des 1. und 4. Kontakts, also zu Beginn und zum Ende der Sonnenfinsternis erreicht. Der Wert 1 oder 100% wird bei einer totalen Sonnenfinsternis erreicht, sobald die Sonne total vom Mond bedeckt ist, also ab Beginn der totalen Phase der Sonnenfinsternis dem Zeitpunkt des 2. Kontakts bis zum Ende der totalen Phase der Sonnenfinsternis dem Zeitpunkt des 3. Kontakts. Bei einer ringförmigen Sonnenfinsternis wird der Wert 1 oder 100% nicht ganz erreicht. Zu den Zeitpunkten des 1. und 4. Kontakts besitzen die Magnitude (11) und der Bedeckungsgrad (21) jeweils den gleichen Wert 0. Zu den Zeitpunkten des 2. und 3. Kontakts besitzen die Magnitude (11) und der Bedeckungsgrad (21) jeweils den gleichen Wert 1. In der partiellen Phase einer Sonnenfinsternis, in der der Grad der Sonnenfinsternis größer 0 und kleiner 1 ist, ist die Magnitude (11) der Sonnenfinsternis jedoch immer größer als der vergleichbare Bedeckungsgrad (21) der Sonnenfinsternis.

Unter der Annahme, dass die topozentrischen Winkelhalbmesser von Sonne und Mond gleich sind, und die topozentrische Winkeldistanz zwischen den Zentren von Sonne und Mond dem topozentrischen Winkelhalbmesser entspricht, wird der halbe topozentrische Winkeldurchmesser der Sonne durch den Mond bedeckt. Die Magnitude (11) der Sonnenfinsternis beträgt in dieser Situation 0,5, der vergleichbare Bedeckungsgrad (21) beträgt in dieser Situation 0,391 oder 39,1%.

Beide Werte, sowohl eine bestimmte Magnitude der Sonnenfinsternis im Wertebereich 0 bis 1, als auch alternativ ein bestimmter Bedeckungsgrad im Wertebereich 0 bis 1, sind als Grenzwert einer Sonnenfinsternis geeignet.

Im direkten Vergleich von Magnitude und Bedeckungsgrad führt die Verwendung eines Bedeckungsgrades im Wertebereich größer 0 und kleiner 1 bei gleichen Grenzwerten zu einer späteren Einschaltzeit und zu einer früheren Ausschaltzeit, also einer kürzeren Einschaltdauer.

Quellenangaben:

[1] Jean Meeus, Astronomical Algorithms, 2nd ed., ISBN 0-943396-61-1

[2] United States Naval Observatory (USNO), The Astronomical Almanac

[3] J.L. Simon, P.Bretagnon,J. Chapront, M. Chapront-Touzé,G. Francou, J.Laskar Astronomy and Astrophysics, 282, 663-683 (1994) "Numerical expressions for precession formulae and mean elements for the moon and the planets"

[4] http://eclipse.gsfc.nasa.gov/SEcat5/SE2001-2100.html (NASA eclipse website)

Bezugszeichenliste

1    Astronomischer Zeitschalter

2    Eingabemittel
3    Funkempfangsmittel
4    Microcontroller
5    Speicher
6    Schaltglied
7    Netzteil
8    Anschlussklemmen
9    Elektrischer Verbraucher
10   Skala des Grades einer Sonnenfinsternis entlang der y-Achse
11   Grad einer Sonnenfinsternis ausgedrückt durch die Magnitude in Abhängigkeit der Zeit
12   Skala der lokalen Uhrzeit entlang der x-Achse
13   Berechneter Einschaltzeitpunkt für Grenzwert der Magnitude = 0
14   Berechneter Ausschaltzeitpunkt für Grenzwert der Magnitude = 0
15   Grenzwert der Magnitude einer Sonnenfinsternis = 0
16   Schaltzustand des Schaltgliedes für Grenzwert der Magnitude = 0
17   Berechneter Einschaltzeitpunkt für Grenzwert der Magnitude = 0,8
18   Berechneter Ausschaltzeitpunkt für Grenzwert der Magnitude = 0,8
19   Grenzwert der Magnitude einer Sonnenfinsternis = 0,8
20   Schaltzustand des Schaltgliedes für Grenzwert der Magnitude = 0,8
21   Grad einer Sonnenfinsternis ausgedrückt durch den Bedeckungsgrad in Abhängigkeit der Zeit
22   Grad einer Sonnenfinsternis = 0 (Beginn und Ende der partiellen Phase der Sonnenfinsternis)
23   Grad einer Sonnenfinsternis = 1 (Beginn und Ende der totalen Phase der Sonnenfinsternis)

**Patentansprüche**

1.  Astronomischer Zeitschalter (1) insbesondere zur Steuerung elektrischer Verbraucher (9) in Abhängigkeit der Zeit und in Abhängigkeit von Positionen der Sonne und des Mondes, bestehend aus manuellen Eingabemitteln (2) zur Eingabe von Eingabedaten und/oder Funkempfangsmitteln (3) zum Funkempfang von Eingabedaten, einem Microcontroller (4) und mindestens einem Schaltglied (6) zur Steuerung elektrischer Verbraucher (9), wobei die manuellen Eingabemittel (2) und/oder Funkempfangsmittel (3) der Eingabe und/oder dem Funkempfang, der lokalen Uhrzeit, des lokalen Datums, der lokalen geografischen Länge, der lokalen geografischen Breite, der lokalen Zeitzone, der lokalen Höhe über dem Meeresspiegel und mindestens eines Grenzwertes dienen, wobei die lokale Uhrzeit und das Datum nach Eingabe oder Empfang mittels interner Zeithaltung fortlaufend aktualisiert werden,
    **dadurch gekennzeichnet,**
    **dass** der Microcontroller (4) in Abhängigkeit der Eingabedaten sowie der lokalen Uhrzeit und des Datums den Grad einer Sonnenfinsternis (11, 21) auf Basis von astronomischen Algorithmen und Konstanten, die im Speicher (5) des Microcontrollers (4) hinterlegt sind, berechnet, und das Einschalten und das Ausschalten eines Schaltgliedes (6) des astronomischen Zeitschalters (1) während einer Sonnenfinsternis in Abhängigkeit eines Vergleichs des berechneten Grades einer Sonnenfinsternis (11, 21) mit einem Grenzwert des Grades einer Sonnenfinsternis (15, 19) in Abhängigkeit der lokalen Uhrzeit steuert.

2.  Astronomischer Zeitschalter nach Anspruch 1, **dadurch gekennzeichnet,**
    **dass** der Grad einer Sonnenfinsternis durch deren Magnitude (11) ausgedrückt wird, und der Grenzwert des Grades der Sonnenfinsternis durch einen bestimmten Grenzwert der Magnitude (15, 19) festgelegt wird.

3.  Astronomischer Zeitschalter nach Ansprüchen 1, 2, **dadurch gekennzeichnet,**
    **dass** der Microcontroller (4) die Magnitude (11) einer Sonnenfinsternis aus der topozentrischen Winkeldistanz zwischen den Zentren der Sonne und des Mondes und dem topozentrischen Winkelhalbmesser der Sonne sowie des Mondes berechnet.

4.  Astronomischer Zeitschalter nach Anspruch 1, **dadurch gekennzeichnet,**
    **dass** der Grad einer Sonnenfinsternis durch den Bedeckungsgrad (21) ausgedrückt wird, und der Grenzwert des Grades der Sonnenfinsternis durch einen bestimmten Grenzwert des Bedeckungsgrades festgelegt wird.

5.  Astronomischer Zeitschalter nach Ansprüchen 1 und 4, **dadurch gekennzeichnet,**
    **dass** der Microcontroller (4) den Bedeckungsgrad (21) einer Sonnenfinsternis berechnet, indem bezogen auf die aktuelle Entfernung des Mondes von der Erde in km, die scheinbare Distanz zwischen den Zentren der Sonne und des Mondes in km, der scheinbare Radius der Sonne in km und der scheinbare Radius des Mondes in km berechnet werden, und auf Basis dieser Werte das Verhältnis der scheinbar vom Mond bedeckten Sonnenfläche zur scheinbaren Gesamtfläche der Sonne berechnet wird.

6. Astronomischer Zeitschalter nach Ansprüchen 1, 2, 3, 4, 5, **dadurch gekennzeichnet,**
   **dass** mindestens ein Grenzwert des Grades einer Sonnenfinsternis (15, 19) im Speicher (5) des Microcontrollers (4) hinterlegt ist, wobei der Grenzwert des Grades einer Sonnenfinsternis (15, 19) mittels der Eingabemittel veränderbar ist, oder als unveränderbarer Grenzwert hinterlegt ist.

7. Astronomischer Zeitschalter nach Ansprüchen 1, 2, 3, 4, 5, 6, **dadurch gekennzeichnet,**
   **dass** der Microcontroller (4), in Abhängigkeit eines Vergleichs des berechneten Grades einer Sonnenfinsternis (11, 21) mit einem Grenzwert des Grades der Sonnenfinsternis (15, 19), den Einschaltzeitpunkt (13, 17) und den Ausschaltzeitpunkt (14, 18) berechnet und ein Steuersignal erzeugt, durch welches das Schaltglied (6) den eingeschalteten Schaltzustand (16, 20) einnimmt, solange der berechnete Grad einer Sonnenfinsternis (11, 21) größer als ein Grenzwert des Grades einer Sonnenfinsternis (15, 19) ist, oder gleich einem Grenzwert des Grades einer Sonnenfinsternis (15, 19) ist.

8. Astronomischer Zeitschalter nach Ansprüchen 1, 2, 3, 4, 5, 6, 7, **dadurch gekennzeichnet,**
   **dass** im Speicher (5) des Microcontrollers (4) eine Datumsliste zukünftiger Sonnenfinsternisse unveränderbar gespeichert ist, die alle Sonnenfinsternisse während der voraussichtlichen Betriebsdauer des astronomischen Zeitschalters umfasst.

9. Astronomischer Zeitschalter nach Ansprüchen 1, 2, 3, 4, 5, 6, 7, 8, **dadurch gekennzeichnet, dass** der Microcontroller (4) die Berechnung des Grades einer Sonnenfinsternis nur dann ausführt, wenn das aktuelle Datum einem Datum der Datumsliste der zukünftigen Sonnenfinsternisse entspricht, und die topozentrische Höhe der Sonne größer 0 Grad ist.

10. Astronomischer Zeitschalter nach Ansprüchen 1, 2, 3, 4, 5, 6, 7, **dadurch gekennzeichnet,**
    **dass** der Microcontroller (4) die Berechnung des Grades einer Sonnenfinsternis (11, 21) nur dann ausführt, wenn die Knotendistanz der Sonne kleiner als ein definiertes Finsternis-Limit ist, und am aktuellen Datum ein Neumond eintritt.

11. Astronomischer Zeitschalter nach Ansprüchen 1, 2, 3, 4, 5, 6, 7, 8, 9, 10, **dadurch gekennzeichnet, dass** die Genauigkeit der berechneten topozentrischen Koordinaten des Mondes durch eine genauere Korrektur der Höhenparallaxe des Mondes gesteigert wird, indem vorzugsweise direkt aus den aktuellen geozentrischen äquatorialen Koordinaten des Mondes die topozentrischen äquatorialen Koordinaten des Mondes berechnet werden, welche anschließend in die topozentrischen Koordinaten des Mondes transformiert werden.

## Claims

1. Astronomical time switch (1), in particular for controlling electrical loads (9) as a function of time and as a function of positions of the sun and the moon, comprising manual input means (2) for feeding in input data and/or radio reception means (3) for radio reception of input data, a microcontroller (4) and at least one switching element (6) for controlling electrical loads (9), in which said manual input means (2) and/or radio reception means (3) are used for input and/or radio reception, of the local time, of the local date, of the local geographic longitude, of the local geographic latitude, of the local time zone, of the local altitude above sea level, and at least of one limit value, in which the local time and date are continuously updated after input or reception by means of internal time keeping, **characterized by**,
   that the microcontroller (4) calculates in dependence of the input data and the local time and date the degree of a solar eclipse (11, 21) based on astronomical algorithms and constants , which are deposited in the memory (5) of the microcontroller (4), and controls in dependence of the local time the switching on and the switching off of a switching element (6) of the astronomical time switch (1) during a solar eclipse in dependence of a comparison of the calculated degree of a solar eclipse (11, 21) with a limit value of the degree of a solar eclipse (15, 19).

2. Astronomical time switch according to claim 1, **characterized by**,
   that the degree of a solar eclipse is expressed by its magnitude (11), and the limit value of the degree of the solar eclipse is defined by a definite limit value of the magnitude (15, 19).

3. Astronomical time switch according to claims 1, 2, **characterized by**,
that the microcontroller (4) calculates the magnitude (11) of a solar eclipse from the topocentric angular distance between the centers of the sun and of the moon and from the topocentric angular semi diameters of the sun and of the moon.

4. Astronomical time switch according to claim 1, **characterized by**,
that the degree of a solar eclipse is expressed by the degree of obscuration (21), and the limit value of the degree of the solar eclipse is defined by a definite limit value of the degree of obscuration.

5. Astronomical time switch according to claims 1 and 4, **characterized by**,
that the microcontroller (4) calculates the degree of occultation (21) of a solar eclipse by calculating the apparent distance between the centers of the sun and of the moon in km, the apparent radius of the sun in km, and the apparent radius of the moon in km in relation to the instantaneous distance of the moon from the earth in km, and by calculating on the basis of these values the ratio of the solar area apparently covered by the moon to the apparent total area of the sun.

6. Astronomical time switch according to claims 1, 2, 3, 4, 5, **characterized by**,
that at least one limit value of the degree of a solar eclipse (15, 19) is deposited in the memory (5) of the microcontroller (4), the limit value (15, 19) being changeable by means of the input means, or being deposited as unchangeable limit value.

7. Astronomical time switch according to claims 1, 2, 3, 4, 5, 6, **characterized by**,
that the microcontroller (4) calculates the switching-on time (13, 17) and the switching-off time (14, 18) in dependence on a comparison of the calculated degree of a solar eclipse (11, 21) with a limit value of the degree of the solar eclipse (15, 19) and generates a control signal, by which the switching element (6) takes the switched-on switching state (16, 20) as long as the calculated degree of a solar eclipse (11, 21) is greater than a limit value of the degree of a solar eclipse (15, 19) or equal to a limit value of the degree of a solar eclipse (15, 19).

8. Astronomical time switch according to claims 1, 2, 3, 4, 5, 6, 7, **characterized by**,
that a date list of future solar eclipses, comprising all solar eclipses during the expected operating time of the astronomical time switch, is unchangeable deposited in the memory (5) of the microcontroller (4).

9. Astronomical time switch according to claims 1, 2, 3, 4, 5, 6, 7, 8, **characterized by**,
that the microcontroller (4) executes the calculation of the degree of a solar eclipse only, if the current date corresponds to a date of the date list of future solar eclipses, and if the topocentric elevation of the sun is greater than 0 degree.

10. Astronomical time switch according to claims 1, 2, 3, 4, 5, 6, 7, **characterized by**,
that the microcontroller (4) executes the calculation of the degree of a solar eclipse (11, 21) only, if the node distance of the sun is less than a defined eclipse limit, and if a new moon occurs at the current date.

11. Astronomical time switch according to claims 1, 2, 3, 4, 5, 6, 7, 8, 9, 10, **characterized by**,
that the accuracy of the calculated topocentric coordinates of the moon is increased by a more accurate correction of the altitude parallax of the moon, by preferably calculating directly from the current geocentric equatorial coordinates of the moon the topocentric equatorial coordinates of the moon, which are then transformed into the topocentric coordinates of the moon.

**Revendications**

1. Minuterie astronomique (1), en particulier pour commander des consommateurs électriques (9) en fonction du temps et en fonction des positions du soleil et de la lune, comprenant des moyens d'entrée manuels (2) pour entrer des données d'entrée et/ou des moyens de réception radio (3) pour la réception radio des données d'entrée, un microcontrôleur (4) et au moins un élément de commutation (6) pour le contrôle de consommateurs électriques (9), dans laquelle les moyens d'entrée manuels (2) et/ou les moyens de réception radio (3) servent à l'entrée, et/ou à la réception radio, de l'heure locale, de la date locale, de la longitude locale, de la latitude locale, de la zone horaire locale, de l'altitude locale au-dessus du niveau de la mer et au moins d'une valeur limite, dans laquelle l'heure locale et la date locale sont mises à jour en permanence après l'entrée ou la réception au moyen d'un système interne de mise à l'heure,

**caractérisée par**,

en ce que le microcontrôleur (4) calcule le degré d'une éclipse solaire (11, 21) en fonction des données d'entrée et de l'heure locale et de la date locale sur la base d'algorithmes astronomiques et de constantes, qui sont mémorisés dans la mémoire (5) du microcontrôleur (4), et contrôle la mise en marche et l'arrêt d'un élément de commutation (6) de la minuterie astronomique (1) pendant une éclipse solaire en fonction d'une comparaison du degré calculé d'une éclipse solaire (11, 21) avec une valeur limite du degré d'une éclipse solaire (15, 19) en fonction de l'heure locale.

2. Minuterie astronomique selon la revendication 1, **caractérisée par**,
en ce que le degré d'une éclipse solaire est exprimé par leur magnitude (11), et la valeur limite du degré d'éclipse solaire est définie par une valeur limite spécifique de la magnitude (15, 19).

3. Minuterie astronomique selon les revendications 1, 2, **caractérisée par**,
en ce que le microcontrôleur (4) calcule la magnitude (11) d'une éclipse solaire à partir de la distance-angulaire topocentrique entre les centres du soleil et de la lune et des semi-diamètres-angulaires topocentriques du soleil et de la lune.

4. Minuterie astronomique selon la revendication 1, **caractérisée par**,
en ce que le degré d'une éclipse solaire est exprimé par le degré de l'obscuration (21), et la valeur limite du degré d'éclipse solaire est définie par une valeur limite spécifique de l'obscuration.

5. Minuterie astronomique selon les revendications 1, et 4, **caractérisée par**,
en ce que le microcontrôleur (4) calcule le degré d'occultation (21) d'une éclipse solaire en calculant la distance apparente entre les centres du soleil et de la lune en km, le semi-diamètre apparent du soleil en km et le semi-diamètre apparent de la lune en km par rapport à la distance instantanée entre la lune et la terre en km, et sur base de ces valeurs est calculé le rapport entre la surface solaire apparente couverte par la lune et la surface apparente totale du soleil.

6. Minuterie astronomique selon les revendications 1, 2, 3, 4, 5, **caractérisée par**,
en ce qu'au moins une valeur limite du degré d'une éclipse solaire (15, 19) est mémorisée dans la mémoire (5) du microcontrôleur (4), la valeur limite du degré d'une éclipse solaire (15, 19) étant modifiable par des moyens d'entrée respectivement enregistrée comme une valeur limite inchangeable.

7. Minuterie astronomique selon les revendications 1, 2, 3, 4, 5, 6, **caractérisée par**,
en ce que le microcontrôleur (4) calcule le temps d'enclenchement (13, 17) et le temps de déclenchement (14, 18) en fonction d'une comparaison du degré calculé d'une éclipse solaire (11, 21) avec une valeur limite du degré de l'éclipse solaire (15, 19), et génère un signal de contrôle, par lequel l'élément de commutation (6) prend l'état de mise en circuit (16, 20) tant que le degré calculé d'une éclipse solaire (11, 21) est supérieur à une valeur limite du degré d'une éclipse solaire (15, 19) ou égal à une valeur limite du degré d'une éclipse solaire (15, 19).

8. Minuterie astronomique selon les revendications 1, 2, 3, 4, 5, 6, 7, **caractérisée par**,
en ce qu'une liste de date d'éclipses solaires futures, quelle comprend toutes les éclipses solaires pendant la durée de vie envisagée de la minuterie astronomique, est mémorisée non modifiable dans la mémoire (5) du microcontrôleur (4).

9. Minuterie astronomique selon les revendications 1, 2, 3, 4, 5, 6, 7, 8, **caractérisée par**,
en ce que le microcontrôleur (4) accomplit le calcul du degré d'une éclipse solaire seulement, si la date courante correspond à une date de la liste de date des éclipses solaires futures, et l'élévation du soleil topocentrique est supérieur à 0 degré.

10. Minuterie astronomique selon les revendications 1, 2, 3, 4, 5, 6, 7, **caractérisée par**,
en ce que le microcontrôleur (4) accomplit le calcul du degré d'une éclipse solaire (11, 21) seulement, si la distance du soleil aux noeuds est inférieure qu'une limite d'éclipse définie, et si une nouvelle lune apparaît à la date courante.

11. Minuterie astronomique selon les revendications 1, 2, 3, 3, 4, 5, 6, 7, 8, 9, 10, **caractérisée par**,

en ce que la précision des coordonnées topocentriques calculées de la lune est augmentée par une correction plus précise de la parallaxe d'élévation de la lune en calculant de préférence directement à partir des coordonnées équatoriales géocentriques instantanées de la lune les coordonnées équatoriales topocentriques de la lune, qui sont alors transformées en les coordonnées topocentriques de la lune.

Fig. 1

Fig. 2 a

Fig.2 b

Fig. 3 a

Fig. 3 b

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004042200 A1
- DE 3019279 A1

- EP 2148252 A

**In der Beschreibung aufgeführte Nicht-Patentliteratur**

- **JEAN MEEUS.** Astronomical Algorithms

- **J.L. SIMON ; P.BRETAGNON ; J. CHAPRONT ; M. CHAPRONT-TOUZÉ ; G. FRANCOU ; J.LASKAR.** Numerical expressions for precession formulae and mean elements for the moon and the planets. *Astronomy and Astrophysics,* 1994, vol. 282, 663-683